(19) Europäisches Patentamt
European Patent Office
Office européen des brevets

(11) **EP 2 120 377 A1**

(12) **EUROPEAN PATENT APPLICATION**
published in accordance with Art. 153(4) EPC

(43) Date of publication:
**18.11.2009 Bulletin 2009/47**

(51) Int Cl.:
*H04J 11/00* (2006.01)   *H04B 7/04* (2006.01)
*H04J 1/00* (2006.01)   *H04J 15/00* (0000.00)

(21) Application number: **08703627.3**

(22) Date of filing: **22.01.2008**

(86) International application number:
**PCT/JP2008/050780**

(87) International publication number:
**WO 2008/096591 (14.08.2008 Gazette 2008/33)**

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **09.02.2007   JP 2007030994**

(71) Applicant: **Sharp Kabushiki Kaisha
Osaka-shi
Osaka 545-8522 (JP)**

(72) Inventors:
• **ISHIKURA, Katsutoshi
Osaka-shi, Osaka 545-8522 (JP)**

• **FUKAMASA, Hidenobu
Osaka-shi, Osaka 545-8522 (JP)**
• **KAMENO, Toshiaki
Osaka-shi, Osaka 545-8522 (JP)**
• **KOBAYASHI, Hirokazu
Osaka-shi, Osaka 545-8522 (JP)**
• **TSUNEKAWA, Koichi
Osaka-shi, Osaka 545-8522 (JP)**

(74) Representative: **Müller - Hoffmann & Partner
Patentanwälte
Innere Wiener Strasse 17
81667 München (DE)**

(54) **OFDM TRANSMITTER AND OFDM RECEIVER**

(57)    In an environment with large transmission delays, use of an OFDM transmitter which includes: a pilot/data allocator for allocating pilot/data symbols on OFDM symbols and an OFDM receiver which includes: an antenna for receiving the OFDM signals sent out from the antenna of this OFDM transmitter; a ratio unit for frequency transforming the OFDM signals received as RF signals to baseband signals; a frequency offset estimate for estimating an offset value; and a frequency offset corrector for performing frequency compensation by the amount of the frequency offset, improves data transmission efficiency while reducing interference of data between subcarriers to prevent degradation of reception characteristics by performing appropriate frequency offset correction.

*Fig. 1*

Printed by Jouve, 75001 PARIS (FR)

**Description**

Technical Field

The present invention relates to an OFDM transmitter and OFDM receiver in a communication system, based on OFDM technique, and using communication technologies such as OFDM technique, MIMO and the like in a combination, in which pilot symbols provided inside OFDM symbols are used to estimate the carrier frequency offset between the transmitter and the receiver.

Background Art

In recent years, studies on mobile communication schemes based on OFDM technique, or other communication schemes, for example a mobile communication scheme based on the combination of a communication technique such as MIMO, CDMA or the like and this OFDM technique, have been actively conducted. The adoption of OFDM technique has also been decided as the downlink communication scheme in LTE (Long Term Evolution) that investigates the next-generation specifications in 3GPP (The 3rd Generation Partnership Project) for setting the standard of mobile phones.
In particular, in OFDM signal mobile communication systems handling multimedia information etc., support for various levels of quality has been requested. For example, in multimedia digital communications usingmobile information terminals, highly reliable signal transmission is required while securing the convenience of mobile communication that enables access to the communication networks and the like from an arbitrary point.
Here, indigital communications, not limitedtomobile communications, it is necessary to establish frequency synchronization between the transmitter and the receiver in order to restore the original information transmitted from the transmitter. In particular, in mobile communications, the synchronization process is indispensable because the receiving condition varies. However, synchronization establishment needs a certain period of time. In a state where synchronization is unestablished, it is impossible to restore the original information, hence high-speed frequency synchronization is needed also for recovery from the state of being out of synchronization.
In OFDM signal communication systems handling multimedia information etc., packet communication is used since the information to be transmitted can be generated in burst modes. In packet communications, signals are not transmitted continuously or with regular intervals, but are transmitted at a burst when information to be transmitted takes place. Accordingly, it is necessary to establish synchronization every burst, and establish synchronization in a short time.
Further, in mobile data terminals handling multimedia information, since it is difficult to employ a high-precision oscillator in view of miniaturization, it is necessary to apply a high-performance carrier-frequency synchronizing method.
By the way, the OFDM transmission scheme is a scheme in which information to be transmitted is spitted into multiple digital signals and the multiple signals are used to modulate sub-carriers which are orthogonal to each other. This parallel transmission using these subcarriers enables the reduction of the signal transmission rate, and provision of guard intervals, which feature OFDM, enables the reduction of the influence of delayed waves compared to a single carrier modulation scheme.
At the same time, in the transmission scheme based on OFDM technique, since the sub-carrier spacing is set small, if there exists a carrier frequency deviation (offset) between the transmitter and receiver, the orthogonality between sub-carriers collapses and interference takes place. Therefore, this scheme is known to undergo sharp degradation of reception characteristics compared to other transmission schemes (reference literature: Minoru Okada, "basins of OFDM", Microwave Workshop and Exhibition (MWE 2003), Tutorial Lecture 02, Digital Modulation/Demodulation Technology (2003-11)).
Accordingly, it is very important to establish carrier frequency synchronization in the transmission scheme based on OFDM technique.
In order to solve the above problems, for example, the following patent document 1 discloses a technology in which, from OFDM symbols formed of OFDM data in frame units, into which pilot symbols are inserted at regular intervals, and into which the aforementioned guard intervals are inserted for every pilot symbol and data symbol, a guard interval for data symbols is detected so as to calculate the approximate frequency offset from sampled data in this interval and make compensation for it, then the fine frequency offset is calculated from the pilot symbols to make compensation.
The following patent document 2 also discloses a technology for calculating the frequency offset using data symbols in guard intervals.

Patent document 1: Japanese Patent Application Disclosure 2003-503944
Patent document 2: Japanese Patent Application Laid-open H09-102774

Disclosure of Invention

Problems to be Solved by the Invention

However, the pilot symbol area for calculating the fine frequency offset described in the above patent document 1 is all filled with pilot symbols of a known sequence, and the pilot symbols are used to calculate the frequency offset.

Accordingly, the technology in the aforementioned patent document 1 is not applied to a format in which data symbols are inserted into this pilot symbol area, so that there is the problem that wireless resources cannot be used efficiently, hence data transmission efficiently cannot be improved.

Further, under an environment in which there are large transmission delays, the delayed waves penetrate into the guard intervals, hence there occurs the case where the periodicity of the guard intervals almost disappears. Accordingly, there occurs such a problem that estimation error in frequency offset compensation becomes large.

The technology disclosed in the aforementioned patent document 2 also uses the data of the guard intervals, hence has the same problems as those of the aforementioned patent document 1.

The present invention has been proposed in view of the above circumstances, it is therefore an object of the present invention to provide an OFDM transmitter and OFDM receiver which efficiently use wireless resources to improve data transmission efficiency and at the same time performs suitable frequency offset correction without using data symbols in guard intervals.

Means for Solving the Problems

In order to solve the above problems, the OFDM transmitter and OFDM receiver according to the present invention have the characteristics as follows.

An OFDM transmitter according to the present invention is an OFDM transmitter for use in a communication scheme based on OFDM technology or in a communication system using OFDM technology and another communication technology, comprising: a pilot/data allocator for allocating pilot symbols of a predetermined known signal sequence and data symbols, at predetermined positions in OFDM symbols; an IFFT processor for performing IFFT operation for the OFDM symbols output from the pilot/data allocator to generate OFDM signals in time domain; and, a radio unit for transmitting the OFDM signals via transmission carrier signals as RF signals, and wherein the pilot/data allocator allocates a plurality of sets including a plurality of the pilot symbols, equi-distantly in at least two ore more of the OFDM symbols, allots the pilot symbols in the set to adjoining sub-carriers and arrange the pilot symbols closely, and allocates pilot symbols in the other OFDM symbol while keeping relative positional relationship with the pilot symbols in the set.

The OFDM transmitter according to the present invention is also **characterized in that** the pilot/data allocator distributes pilot symbols in such an arrangement that the pilot symbols arranged in the OFDM symbols are located line-symmetrically, taking the middle line of the frequency axis of the OFDM symbols as the axis of symmetry.

The OFDM transmitter according to the present invention is also **characterized in that** in the plural sets, the individual pilot symbols in a first set respectively have pilot symbol values that are multiplied by a first common coefficient while the individual pilot symbols in a second set respectively have pilot symbol values that are multiplied by a second common coefficient, and the pilot symbol series in the first set and the pilot series in the second set are the same except the difference between the common coefficients.

The OFDM transmitter according to the present invention is also **characterized in that** the pilot/data allocator includes a data buffer unit for buffering transmission data, a pilot signal generator for generating pilot signals and a data switching control means for performing switching control between the pilot signal and the transmission data, and the data switching control means changes the allocation pattern of the pilot symbols, by modifying the timing of switching control between the pilot signal and the transmission data.

The OFDM transmitter according to the present invention is also **characterized in that** the another communication technology is MIMO, and the pilot/data allocator allocates multiple kinds of pilot symbols corresponding to the number of transmitting antennas in the set.

An OFDM receiver according to the present invention is an OFDM receiver for receiving the RF signals generated by the pilot/data allocator in the OFDM transmitter defined in any one of Claims 1 to 5, comprising: a radio unit for converting the RF signals into the baseband to generate time-domain OFDM signals; a frequency offset estimator for estimating the offset of a modulated carrier frequency between the transmitter and receiver; and, a frequency offset corrector for performing frequency offset correction based on the frequency offset calculated from the frequency offset estimator, and is **characterized in that** the frequency offset estimator includes: a FFT processor for generating frequency-domain OFDM symbols from the OFDM signals; a pilot processor which performs, of the generated OFDM symbols, complex correlating operations between a pilot symbol located at a particular sub-carrier frequency in the m-th OFDM symbol in an OFDM frame and the pilot symbols located at sub-carrier frequencies a predetermined distance apart in two directions, toward higher and lower positions, from the particular sub-carrier frequency in the n-th OFDM symbol, to output a complex correlation value; and a frequency offset calculator for calculating the frequency offset based on the phase rotation quantity of the complex correlation value.

The OFDM receiver according to the present invention is also **characterized in that** the pilot processor calculates the total average quantity of phase rotation between the particular pilot symbols that are located adjacent to each other inside one of the OFDM symbols, and performs the complex correlating operations by performing phase correction to the pilot symbols located at the particular sub-carrier frequencies in the m-th OFDM symbol based on the total average quantity of phase rotation.

The OFDM receiver according to the present invention is also **characterized in that** the pilot processor calculates the first average quantity of phase rotation between the particular pilot symbol in the m-th OFDM symbol and a pilot symbol located adjacent to the pilot symbol on the higher sub-carrier frequency side thereof, and the second average quantity of phase rotation between the particular pilot symbol in the m-th OFDM symbol and a pilot symbol located adjacent to the pilot symbol on the lower sub-carrier frequency side thereof, and performs the complex correlating operations by performing phase correction to the pilot symbol located at the particular sub-carrier frequency in the m-th OFDM symbol based on the first average quantity of phase rotation and the second average quantity of phase rotation.

Effect of the Invention

Since the OFDM transmitter and OFDM receiver according to the present invention are configured as above, it is possible to provide the effect as follows.

According to the OFDM transmitter and OFDM receiver used in the communication system of the present invention, allocation of pilot symbols inside OFDM symbols in such a manner as to reduce estimation error in calculating the frequency offset by complex correlating operations, makes it possible to improve the accuracy of frequency offset calculation to reduce the interference of data between sub-carriers, prevent the degradation of reception characteristics and contribute to the improvement of channel estimation error using pilot symbols.

According to the OFDM transmitter and OFDM receiver used in the communication system of the present invention, arrangement of both pilot symbols and data symbols inside OFDM symbols, makes it possible to use radio resources effectively and enhance transmission efficiency.

Brief Description of Drawings

FIG. 1 is a system block diagram of an OFDM transmitter and OFDM receiver according to the present invention.
FIG. 2 is a system block diagram of another OFDM transmitter and OFDM receiver according to the present invention.
FIG. 3 is a system block diagram of another OFDM transmitter and OFDM receiver according to the present invention.
FIG. 4 (a) is a diagram showing a first pilot pattern and (b) is a diagram showing a second pilot pattern.
FIG. 5 is a block diagram showing the configuration of a pilot/data allocator of an OFDM transmitter according to the present invention.
FIG. 6 (a) is a diagram showing which pilot symbols (P1, P1') are taken to perform correlating operations in the first pilot pattern and (b) is a diagram showing which pilot symbols (P1, P1') are taken to perform correlating operations in the second pilot pattern.
FIG. 7 is a block diagram showing the configuration of a frequency offset estimator 202 of the present embodiment.
FIG. 8 is a block diagram showing the configuration of a pilot processor 251 of the first example.
FIG. 9 is a block diagram showing the configuration of a pilot processor 300 of the second example.
FIG. 10 is a block diagram showing the configuration of a pilot processor 350 of the third example.
FIG. 11 is a chart showing specifications for computer simulation.
FIG. 12 is a chart showing the simulation result based on a frequency offset estimating method 1.
FIG. 13 is a chart showing the simulation result based on a frequency offset estimating method 2.
FIG. 14 is a chart showing the simulation result based on a frequency offset estimating method 3.

Description of Reference Numerals

| | |
|---|---|
| 10 | OFDM transmitter |
| 20, 21, 22 | OFDM receiver |
| 30 | Transmission path |
| 100 | Pilot/data allocator |

| 101 | Modulator |
| 102 | IFFT processor |
| 103, 201 | Radio unit |
| 104, 200 | Antenna |
| 202, 212 | Frequency offset estimator |
| 203 | Frequency offset corrector |
| 204, 250 | FFT processor |
| 205, 225 | Channel estimator |
| 206 | Demodulator |
| 240 | Data buffer |
| 241 | Pilot signal generator |
| 242 | Data switching control means |
| 243 | Changeover SW |
| 251, 300, 350 | Pilot processor |
| 252, 264, 265, 266 | Adder |
| 253 | Phase transformer |
| 254 | Frequency offset calculator |
| 26 | Delay unit |
| 262 | Complex conjugator |
| 263 | Multiplier |

Best Mode for Carrying Out the Invention

Next, the embodiment of an OFDM transmitter and OFDM receiver according to the present invention will be described with reference to the drawings.

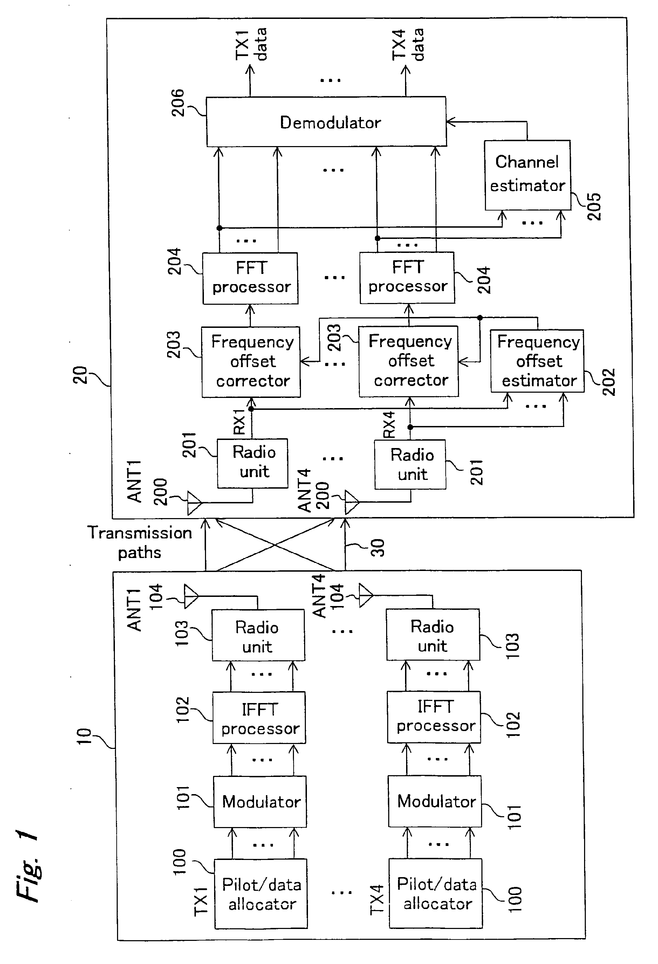

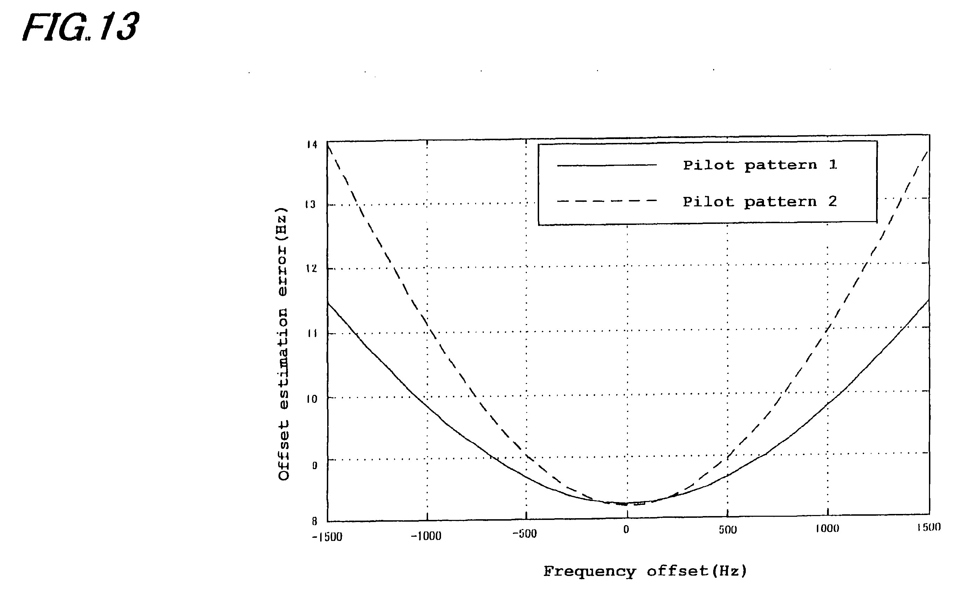

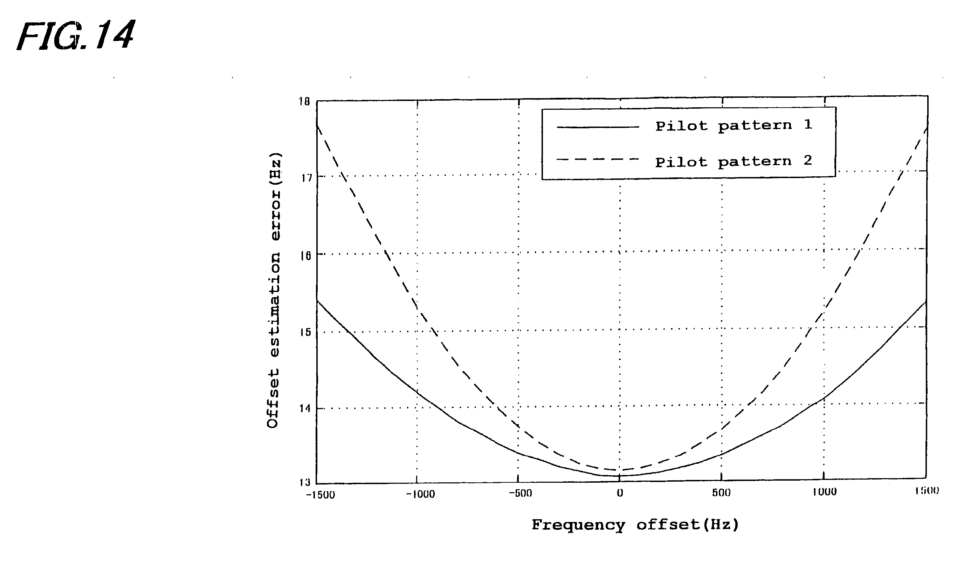

FIGS. 1 to 14 show one exemplary embodiment of an OFDM transmitter and OFDM receiver according to the present invention. In the drawings, parts allotted with the same reference numerals are assumed to represent the same components.

Tobeginwith, the configuration and overall operation of a communication system for the OFDM transmitter and OFDM receiver of the present invention will be briefly described.

FIG. 1 is a system block diagram showing an OFDM transmitter and OFDM receiver according to the present invention.

Herein, a system example in which an OFDM communication scheme and a 4x4 MIMO communication scheme are combined (4x4 MIMO-OFDM communication system) will be described.

The 4x4 MIMO-OFDM communication system shown in FIG. 1 is a system for transmitting and receiving a 4-branch OFDM signal via 4x4 MIMO channels (transmission paths 30) and is comprised of an OFDM transmitter 10 and an OFDM receiver 20.

Here, to be concise, the drawing only shows the constitutions related to OFDM transmitter 10 and OFDM receiver 20 of the present invention.

The arrangement of pilot symbols that characterizes the present invention, the detailed configurations and operations of a pilot/data allocator 100 provided for OFDM transmitter 10 for allocating pilot and data symbols on OFDM symbols, and a frequency offset estimator 202 provided for OFDM receiver 20 for calculating a frequency offset estimate based on the pilot symbols, will be described later.

OFDM transmitter 10 includes: the aforementioned pilot/data allocator 100 for allocating pilot/data symbols on OFDM symbols; an unillustrated guard interval inserting block; a modulator 101 for modulating subcarriers with pilot/data signals from pilot/data allocator 100; an IFFT processor (Inverse Fast Fourier Transform processor) 102 for transforming the modulated signal from frequency-domain signals into time-domain signals; a radio unit 103 for converting OFDM signals that have been transformed in time-domain representation into RF signals; and an antenna 104 for radiating the converted RF signals as radio waves to transmission path 30. Since a 4x4 MIMO-OFDM communication system is presumed herein, OFDM transmitter 10 is provided with four sets of the above identical series.

On the other hand, OFDM receiver 20 that receives OFDM signals containing pilot signals, sent out from OFDM transmitter 10 via transmission path 30, includes: an antenna 200 for receiving OFDM signals sent out from antennas 104 of OFDM transmitter 10; a radio unit 201 for performing frequency conversion of OFDM signals received as RF signals into baseband signals; a frequency offset estimator 202 for detecting a modulated carrier frequency deviation (offset) between the OFDM transmitter and receiver to estimate the offset value; a frequency offset corrector 203 for making frequency compensation by the amount of frequency offset estimated by frequency offset estimator 202; a FFT (Fast Fourier Transform processor) 204 for transforming the time-domain signal that has been subjected to frequency compensation through frequency offset corrector 203 into its frequency-domain signal; a channel estimator 205 for compensating for channel gain variations due to change of communication environment of the channel; and a demodulator 206 for demodulating the OFDM signals to output the transmitted data.

Since a 4x4 MIMO-OFDM communication system is constructed, similarly to the OFDM transmitter, the receiver is also provided with four sets of the series from radio unit 201 to FFT processor 204.

Next, the overall operation of the transmitter/receiver system thus constructed as above will be described briefly.

OFDM transmitter 10 forms separate OFDM signals corresponding to four transmission antennas while OFDM receiver 20 receives the OFDM signals by four receiving antennas and converts the OFDM signal in the RF signal form into its baseband time-domain OFDM signal for every receiving antenna. Then, frequency offset estimator 202 calculates a frequency offset estimate for every OFDM frame to perform frequency offset correction by frequency offset corrector 203. Here, the OFDM frame is a signal unit consisting of a plurality of OFDM symbols, and does not necessarily coincide with the processing unit of transmission data.

In calculating the frequency offset estimate, as described above, in order to prevent degradation of reception characteristics due to occurrence of interference caused by loss of the orthogonality between sub-carriers on the receiver side as a result of the sub-carrier frequency deviation (offset) between the OFDM transmitter and receiver and in order to improve transmission efficiency, OFDM transmitter 10 inserts data also into the pilot symbols of OFDM transmitter 10, and also generates a pilot pattern within the pilot symbols that enable the receiver side to perform frequency offset estimation with a good precision and sends out the pilot symbols based on this pilot pattern as the OFDM signal to the receiver side. Frequency offset estimator 202 in OFDM receiver 20 detects and extracts the pilot symbols and implements a correlating process between aftermentioned two pilot symbols to calculate the frequency offset value.

Further, in OFDM receiver 20, the OFDM signal in frequency time-domain is transformed into a frequency-domain OFDM by FFT processor 204, then estimation and compensation of channel gain are performed by channel estimator 205, and the demodulated data is obtained by demodulator 206.

Though it is usual that the operation of channel gain estimation by channel estimator 205 is also performed every one frame, the processing unit for offset estimation and the processing unit for channel gain may be different.

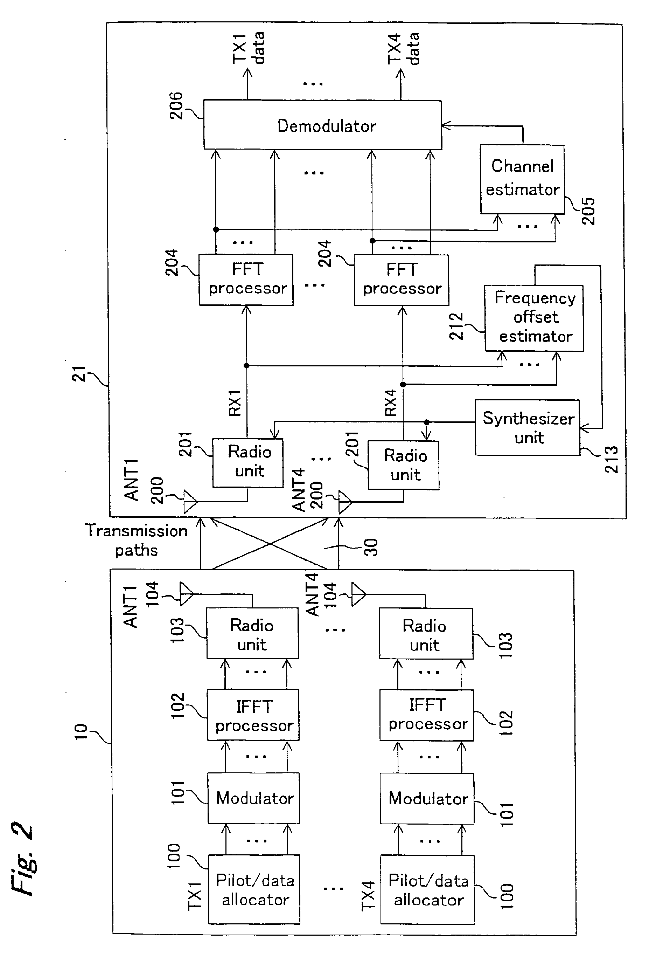

Further, frequency offset estimator 202 of the present embodiment is configured to directly perform frequency compensation for the time-domain OFDM signal, using frequency offset corrector 203, but it is also possible to provide a configuration in which an AFC (automatic frequency control) operation for converging the frequency error by a loop process is functioned using the calculated frequency offset estimate in a synthesizer unit 213, as shown in FIG. 2. However, in the case of the AFC operation, a time lag occurs to reflect the correction by the estimated frequency offset due to the loop process. Also, the convergence time usually becomes greater compared to the case of the present embodiment.

Further, channel estimator 205 calculates the channel gain estimate using pilot symbols in frequency-domain, but when frequency correction is performed based on the frequency offset estimate obtained by frequency offset estimator 22, interference of data between sub-carriers is reduced, so that channel estimate error can be improved.

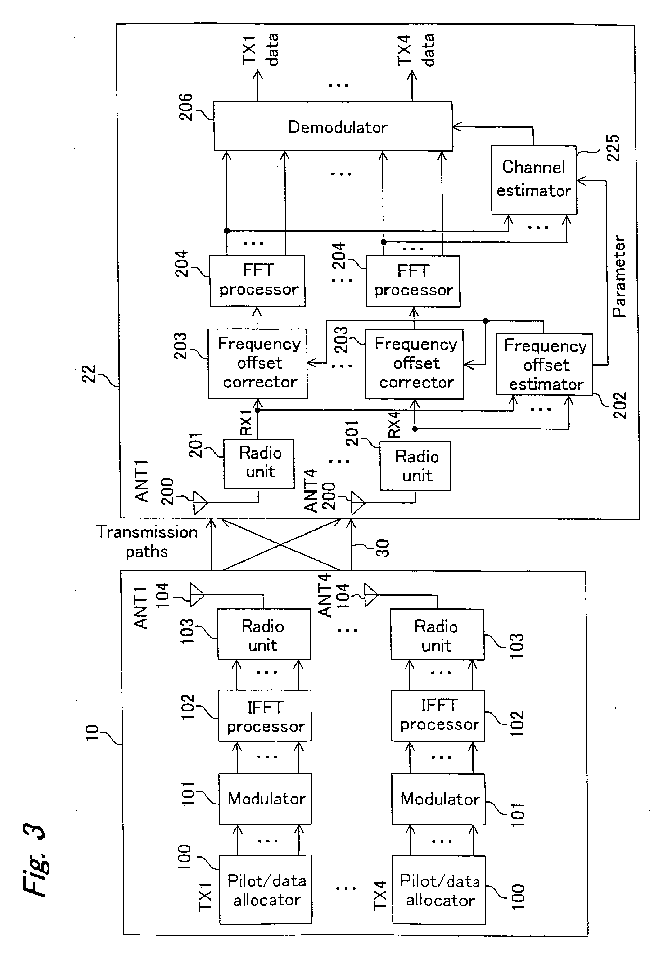

As shown in FIG. 3, it is also possible to construct a channel estimator 225 that improves channel estimation accuracy by use of the result etc. obtained midway from frequency offset estimator 202.

Next, a configurational example of a pilot pattern for improving data transmission efficiency and for calculating the frequency offset with good precision will be demonstrated, and the configuration and operation of a pilot pattern generator in the OFDM transmitter will be described hereinbelow.

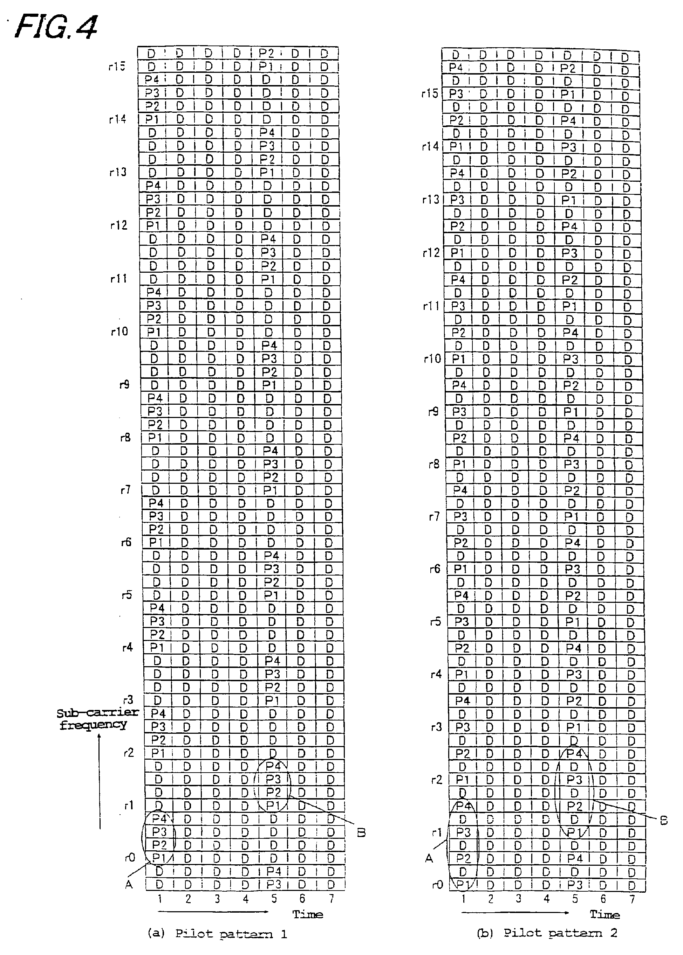

The data configuration of an OFDM frame is usually formed of data symbols and pilot symbols transmitted as a signal of a known sequence. FIG. 4 is a diagram showing a configurational example of a pilot pattern in the OFDM frame according to the present invention, (a) showing a pilot pattern 1 and (b) showing a pilot pattern 2.

The pilot patterns shown in FIGS. 4(a) and (b) are constructed aiming at allocating pilot symbols that can improve data transmission efficiency, enables calculation of the frequency offset with a good precision on the OFDM receiver side, and still does not need either device scale or complex configuration. Since the pilot pattern shown in FIG. 4 (a) is arranged so that pilots are put together, this results in an allocation that enables calculation of the frequency offset with a further improved precision.

FIG. 4 shows one frame OFDM data in a two-dimensional representation, in which 64 sub-carrier frequencies are taken in the vertical direction and 7 OFDM symbols are taken in the time axis direction(a matrix of 7 OFDM symbols x 64 subcarrier frequencies) and pilot symbols are distributed keeping relative positional relationships in the sub-carrier axis direction, inside the first time-axis and fifth time-axis OFDM symbols.

Since in the present embodiment, a 4x4 MIMO-OFDM communication system is presumed as mentioned already, pilot symbols corresponding to four transmitting antennas are represented by P1, P2, P3 and P4, respectively. These pilot symbols represented by P1 to P4 are orthogonalized by allotting them to different sub-carriers, so that the signal for each antenna will not interfere with the others. Here, D represents a data symbol.

The frequency offset estimating method according to the present invention (which will be detailed later) is to calculate a frequency offset estimate by examining the correlation between two pilot symbols (e.g., the m-th OFDM symbol and the n-th OFDM symbol) within the aforementioned one frame to calculate the quantity of phase rotation of the correlation value, thereby calculating the frequency offset estimate.

As understood from the drawing, while two pilot symbols are provided, the ordinary data is allotted to the sub-carriers other than those of pilot symbols (P1 to P4) in the pilot symbol areas, so that it is possible to realize the reduction of the overhead and enhance data transmission efficiency.

The difference between pilot patterns 1 and 2 shown in FIGS. 4 (a) and (b) is that P1 to P4 are arranged contiguously or P1 to P4 are scattered equally apart from each other. Since data symbols depends on the transmission data sequence and what symbols they will be cannot be expected, it is impossible to suppress interference between adjacent sub-carriers within a fixed level if there is a frequency offset. On the other hand, since pilot symbols can be constructed as a known signal sequence, it is possible to suppress interference between sub-carriers within a substantially fixed level. Accordingly, for example, the levels of sub-carrier interference between pilot symbols in time axis columns 1 and 5 become substantially equal to each other, it is hence possible to perform frequency offset estimation by conducting a correlating process between the two pilot symbols.

Since, in conducting a correlating process between pilot symbols in the first and fifth symbol columns, every pilot symbol (P1 to P4) is arranged symmetrically (arranged line symmetrically taking the middle sub-carrier frequency slot of OFDM symbols as the center axis) in such a manner that the number of additions in the correlating process between the first pilot symbol to be the reference and the pilot symbol located in the fifth pilot symbol column and on the sub-carrier above the pilot symbol to be the reference in the first pilot symbol column, and the number of additions in the correlating process with the pilot symbol located in the fifth pilot symbol column and on the sub-carrier below are as a whole equal to each other, it is possible to reduce error in phase rotation quantity operations, hence improve frequency offset estimation accuracy.

Further, one set (block) of pilot symbols shown in the figure, for example, in the block (the first set) designated by symbol A and in the block (the second set) designated by symbol B, common coefficients $k_A$ (the first coefficient) and $k_B$ (the second coefficient) are defined inside respective blocks so that the pilot symbols in respective blocks may be set as ($k_A \cdot$P1, $k_A \cdot$P2, $k_A \cdot$P3, $k_A \cdot$P4) and ($k_B \cdot$P1, $k_B \cdot$P2, $k_B \cdot$P3, $k_B \cdot$P4). For example, when thinking about P1, if the above relationship holds the interference component given from P2 to P1 is P2/P1, so that P1 will be affected by the common interference component, not depending on the blocks. Accordingly, the interference between pilot sub-carriers can be canceled out when correlating operations are carried out, hence frequency offset estimation accuracy can be improved.

Next, the configurational example and the operation of a pilot/data allocator of OFDM transmitter 10 will be described hereinbelow.

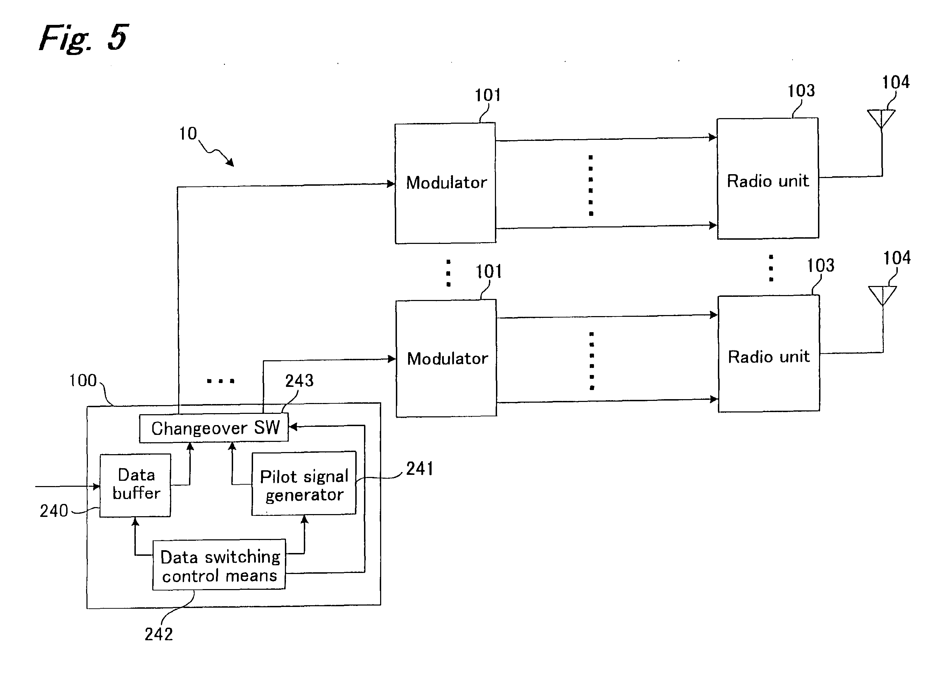

FIG. 5 is one example of a block diagram of the OFDM transmitter according to the present invention, and is a block diagram showing a pilot/data allocator in OFDM transmitter 10 in the system block diagram of FIG. 1.

Pilot/data allocator 100 includes; a data buffer 240 for buffering transmitted data from the outside; a pilot signal generator 241 for generating a known signal sequence to be the pilot symbols; a data switching control means 242 for switching its output between data and pilots appropriately to send out a signal to modulator 101; and a changeover SW 243 that is controlled by data switching control means 242.

Data switching control means 242 has a parameter table in which the times at which pilot signals are inserted on the one-frame format and information as to which antenna is used for transmitting each pilot have been recorded beforehand. In pilot signal generator 241, the pattern of pilots to be generated in accordance with the instructions from data switching means 242 has been stored. In this arrangement, data switching control means 242, based on the data stored in this parameter table, switches its output between data and pilots to supply a suitably arranged signal sequence to modulator 101.

In this way, it is possible to generate a pertinent pilot pattern. Further, it is also possible to generate an arbitrary arrangement of pilots, not limited to the pilot allocations shown in FIGS. 4 (a) and (b) when the above parameter table is modified.

Next, taking a configurational example of a frequency offset estimator which receives the pilot signals based on the pilot pattern, sent out from OFDM transmitter 10 to perform frequency offset estimation, its specific operation will be described hereinbelow.

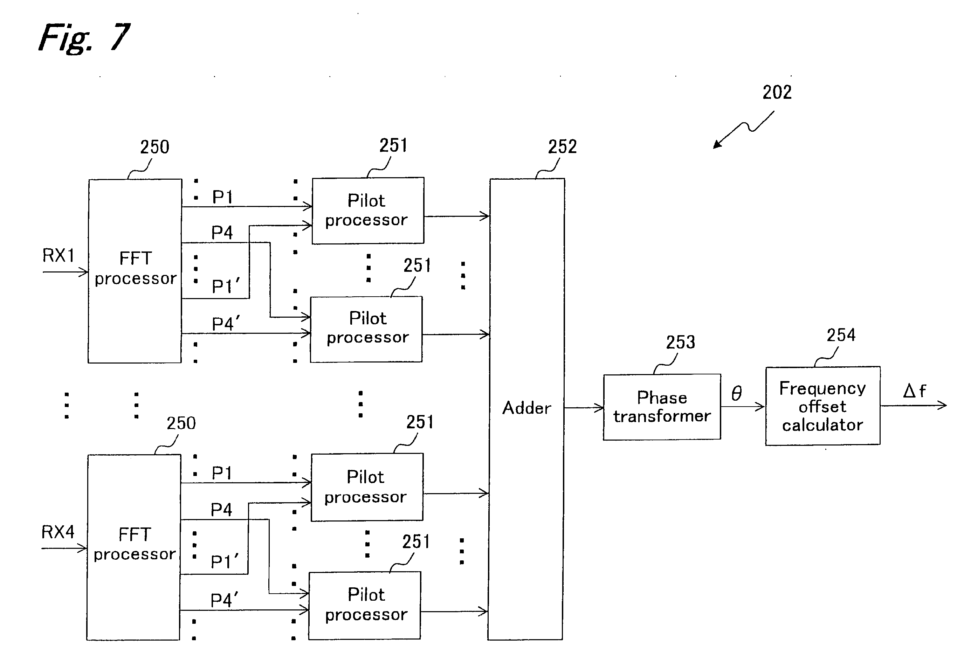

FIG. 7 is a block diagram showing a configurational example of frequency offset unit 202. Frequency offset unit 202 includes FFTs 250 receiving time-domain OFDM signals that are affected by carrier frequency offsets between the transmitter and the receiver, convert the signals from time domain to frequency domain to detect OFDM symbols in a predetermined time and pilot symbols inserted in the predetermined slot of the OFDM symbol on the sub-carrier frequency axis; pilot processors 251 performing complex correlating calculation between pilot symbols (P1 to P4 in the first column of OFDM symbols and pilot symbols (P1' to P4') in the fifth column of OFDM symbols in FIG. 4; an adder 252 adding up the correlation values; a phase transformer 253 performing a phase angle operation of the synthesized correlation value output from adder 252 to calculate a synthesized estimated phase difference θ between the first and fifth pilot symbols; and a frequency offset calculator 254 calculating a frequency offset from the synthesized estimated phase difference θ between the first and fifth output from phase transformer 253 to output the frequency offset to frequency offset corrector 203 shown in FIG. 1.

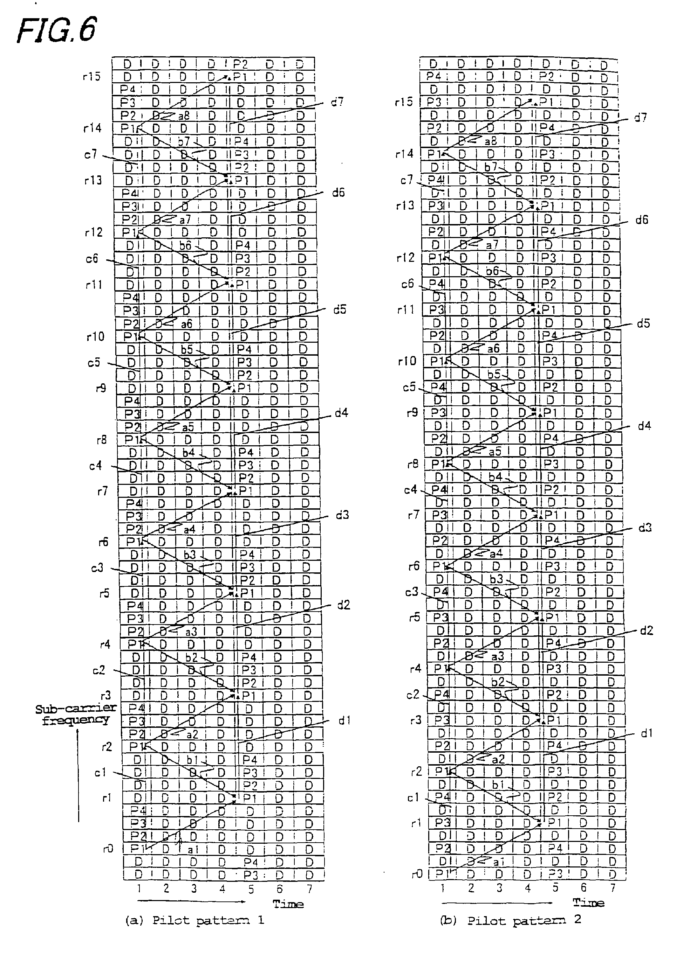

A configurational example, correlating process and offset calculating operation of pilot processor 251 in frequency offset unit 202 constructed as above, will be described using FIGS. 6, 8 to 10.

<Configurational Example of First Pilot Processor 251 (Frequency Offset Estimating Method 1)>

FIG. 6 is a diagram showing between which pilot symbols (P1, P1') correlating calculation should be done, by taking up pilot symbol P1 after the FFT processing in FFT processor 250 shown in FIG. 7, (a) is a diagram showing between which pilot symbols (P1, P1') correlating calculation should be done in the first pilot pattern and (b) is a diagram showing between which pilot symbols (P1, P1') correlating calculation should be done in the second pilot pattern.

On the vertical axis or the sub-carrier frequency axis in FIG. 6, when the pilot symbols at which P1s are distributed are represented by $r_0$, $r_1$, $\cdots$ $r_{Np-1}$, from the lowest sub-carrier frequency, the pilot symbols on the first symbol column are located at $r_0$, $r_2$, $\cdots$ $r_{Np-2}$ while the pilot symbols on the fifth symbol column are located at $r_1$, $r_3$, $\cdots$ $r_{Np-1}$. In FIG. 6, the value of $N_P$ is 16.

Here, there occurs a phase rotation from the phase of the sub-carrier of pilot symbol P disposed in the first symbol to that of pilot symbol P' disposed in the fifth symbol in accordance with the carrier frequency offset $\Delta f$ between the transmitter and receiver. This quantity of phase rotation can be determined by performing a complex correlating operation between pilot symbol P1 and pilot symbol P1' to calculate the phase angle of the complex correlation value. In order to calculate the quantity of phase rotation, the operation shown by the following formula is performed.

[Formula 1]

$$\theta = \arg\left[ \sum_N \sum_M \left( \sum_{i=0}^{N_p/2-1} r_{2i+1} \cdot \overset{\bullet}{r_{2i}} + \sum_{i=1}^{N_p/2-1} r_{2i-1} \cdot \overset{\bullet}{r_{2i}} \right) \right]$$

The first term in the above formula is the complex correlation value between the pilot symbol P1 in the first symbol column and the pilot symbol P1' (the pilot symbol one above the pilot symbol to provide the reference) located on the sub-carrier (designated by arrows a1 to a8 in FIGS. 6 (a) and (b)) four levels above in the fifth symbol column. The second term in the above formula is the complex correlation value between the pilot symbol P1 in the first symbol column and the pilot symbol P1' (the pilot symbol one below the pilot symbol to provide the reference) located on the sub-carrier (designated by arrows b1 to b7 in FIGS. 6(a) and (b)) four levels below in the fifth symbol column. $\Sigma_n \Sigma_M$ indicates the summation over all the transmitting antennas and receiving antennas. Here, in the above formula, r* indicates the complex conjugate of r and arg (x) indicates the phase angle of a complex number x.

In this way, it is possible to calculate the quantity of phase rotation (phase difference) between pilot symbols P1 and P1.

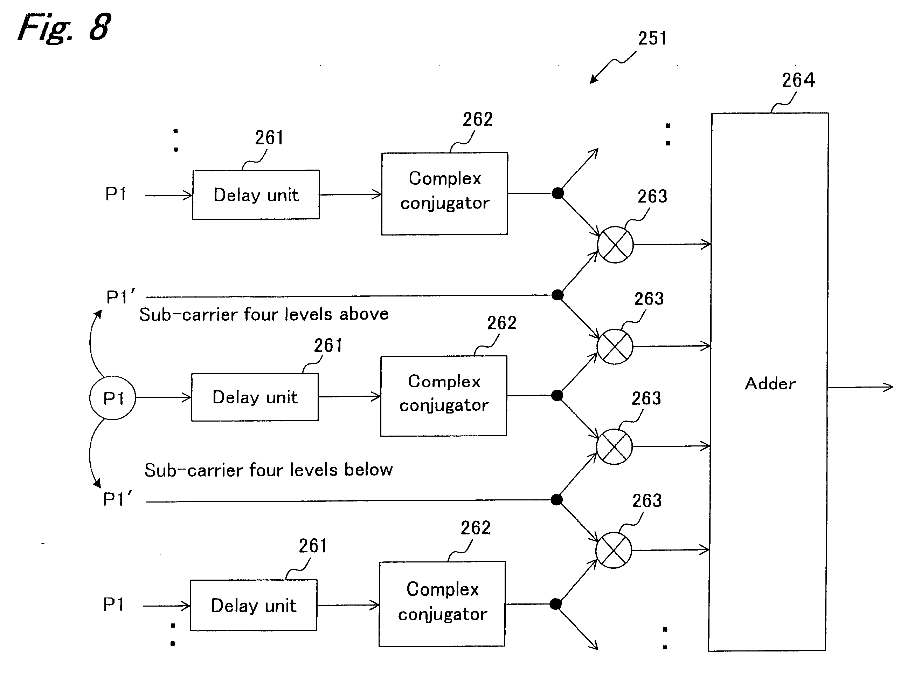

FIG. 8 is a block diagram showing a configuration of pilot processor 251 of the first example.

When the pilot symbol P1 encircled in FIG. 8 is observed, the calculation of the first term in the above formula 1 corresponds to the complex correlating operation between this pilot symbol P1 and the pilot symbol P1' located one thereabove and the calculation of the second term corresponds to the complex correlating operation between this pilot symbol P1 and the pilot symbol P1' located one therebelow.

Further, in the above formula 1, the adding operations of the correlating calculation of the first and second terms are performed separately from each other, but in pilot processor 251 of FIG. 8, the adding operations are performed simultaneously by a single adder 264.

Here, since pilot symbol P1 is obtained temporally ahead of pilot symbol P1', the symbol is passed through a delay unit so as to be synchronized with P1'. Further, since for P1 in formula 1, its complex conjugate is produced to be multiplied with P1', a complex conjugator 262 is provided downstream of delay unit 261.

Frequency offset estimator 202 of the present embodiment shown in FIG. 7, includes sixteen pieces of pilot processors 251 to support 4 transmitting antennas x 4 receiving antennas, and adds up the correlation values obtained from these pilot processors 251 by means of a single adder 252 and calculates the synthesized phase difference θ by phase transformer 253 that performs an arg() operation on the resultant synthesized correlation value in the same manner as in the above formula 1.

The frequency offset value Δf indicated in the following formula is calculated from the thus obtained phase difference.

[Formula 2]

$$\Delta f = \frac{\theta}{2\pi \cdot Ds \cdot Ts}$$

Here, Ts is the OFDM symbol length, Ds is the interval between pilot symbols (in this case Ds=5).

The thus calculated frequency offset value $\Delta f$ is supplied to frequency offset corrector 203 shown in FIG. 1. This frequency offset corrector 203 shifts the frequency by the amount of the frequency offset.

It is also possible to rewrite the above formula 1 into the form as follows.

[Formula 3]

$$\theta = \arg\left[ \sum_N \sum_M \left( \sum_{i=1}^{Np/2} (r_{2i-1} + r_{2i+1}) \cdot r_{2i}^* + r_1 \cdot r_0^* \right) \right]$$

This formula can be translated as that, for one pilot symbol P arranged in the first symbol column, the average of pilot symbols P' located at the sub-carrier frequency four levels above and the sub-carrier frequency four levels below in the fifth symbol column is determined to calculate a channel estimate for the same sub-carrier frequency as that of the pilot symbol P disposed in the first pilot symbol while the channel estimate in the first symbol column is determined, whereby the phase difference is determined based on the channel estimate.

<Configurational Example of Second Pilot Processor 300 (Frequency Offset Estimating Method 2)>

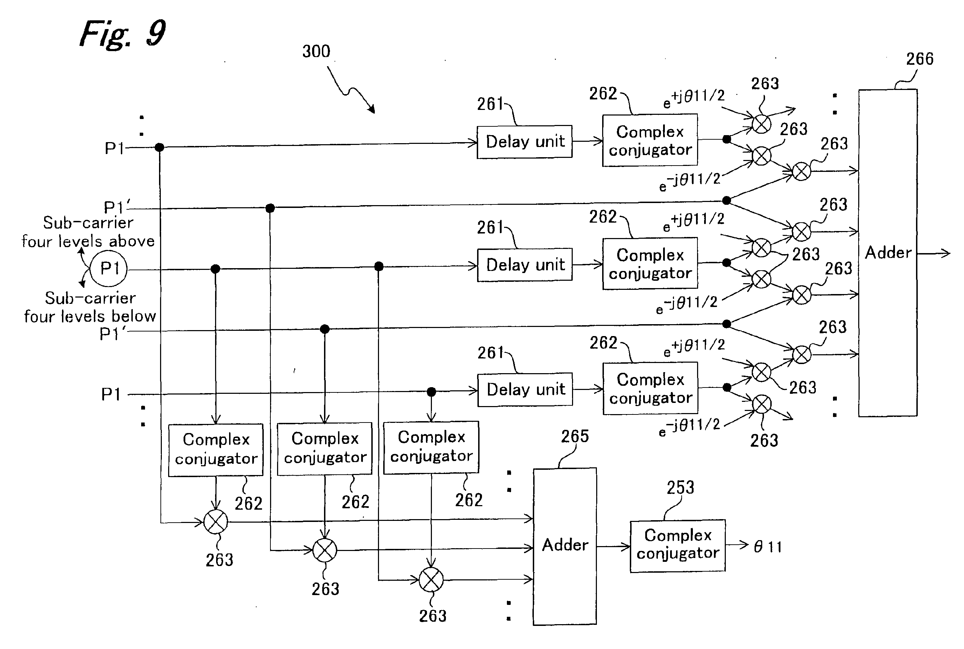

FIG. 9 is a block diagram showing a configuration of a pilot processor 300 of the second example.

The configuration of this pilot processor 300 can be easily understood from the following estimating method, so that the description is omitted herein.

To begin with, phase average $\phi$ of those between adjacent pilots (designated by arrows c1 to c7 and d1 to d7 in FIG. 6) in the same OFDM symbol can be calculated by the formula below. That is, phase average $\phi$ is calculated as:

[Formula 4]

$$\phi = \arg\left( \sum_{i=0}^{Np-3} r_{i+2} \cdot r_i^* \right)$$

Then, the complex correlating operation between pilot symbol P1 and P1' at the subcarrier four levels thereabove by first pilot processor 251 is modified by the phase-correcting component ($-\phi/2$; the amount of phase delay) and the complex correlating operation between pilot symbol P1 and P1' at the subcarrier four levels therebelow is modified by the phase-correcting component ($+\phi/2$; the amount of phase delay), so as to calculate the quantity of phase rotation.

The formula for calculating the quantity of phase rotation is shown below.

[Formula 5]

$$\theta = \arg\left[ \sum_N \sum_M \left( \exp(-j\phi/2) \cdot \sum_{i=0}^{Np/2-1} r_{2i+1} \cdot r_{2i}^* + \exp(j\phi/2) \cdot \sum_{i=1}^{Np/2-1} r_{2i-1} \cdot r_{2i}^* \right) \right]$$

According to this estimating method, execution of phase correction in complex correlating operations makes it possible to further reduce estimation error compared to the estimate obtained by the aforementioned frequency offset estimating method 1.

As shown in FIG. 9, phase average component $\theta 11$ is calculated by complex conjugators 262, multipliers 263, an adder 265 and a phase transformer 253 in pilot processor 300. This phase average component $\theta 11$ corresponds to the aforementioned phase average $\phi$. In the arrangement for phase correction to complex correlating operations, in order to perform correction to the complex correlating operation between the pilot symbol P1 (i-th pilot symbol) and P1' ((i+1)-th pilot symbol) at the subcarrier four levels thereabove, multiplier 263 multiplies pilot symbol P1 by the phase correcting component ($e^{-j\theta 11/2}$; corresponding to the above $-\phi/2$) while in order to perform correction to the complex correlating operation between the pilot symbol P1 and P1' at the subcarrier four levels therebelow, multiplier 263 multiplies pilot symbol P1 by the phase correcting component ($e^{+j\theta 11/2}$; corresponding to the above $+\phi/2$).

<Configurational Example of Third Pilot Processor 350 (Frequency Offset Estimating Method 3)>

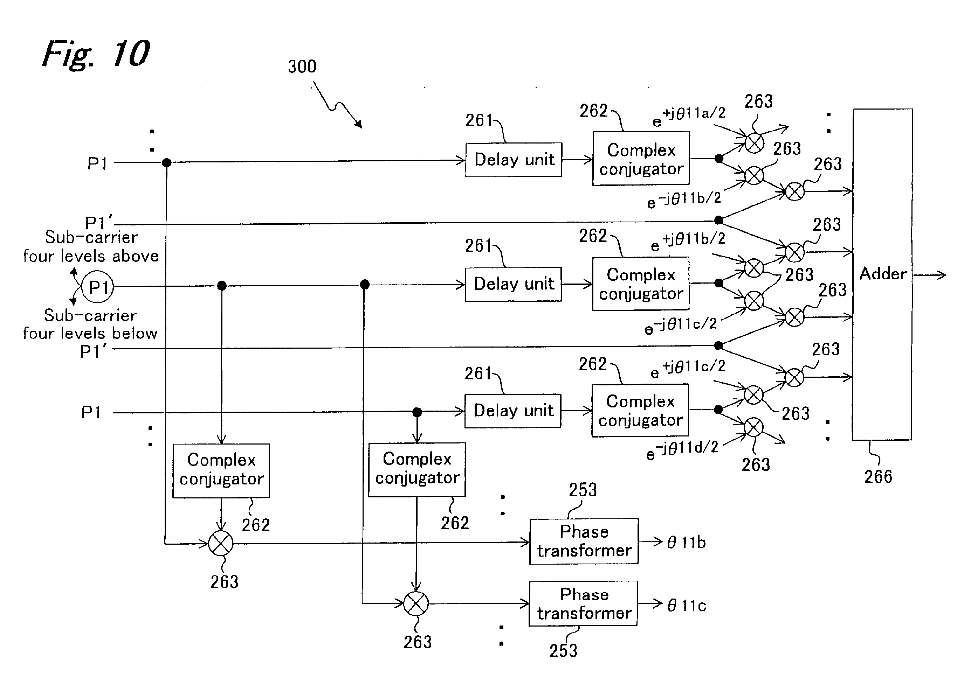

FIG. 10 is a block diagram showing a configuration of a pilot processor 350 of the third example.

Here, the configuration of this pilot processor 350 can also be easily understood from the following estimating method, similarly to the configuration of the above second pilot processor 350, so that the description is omitted herein.

In pilot processor 300 of the above second example, to calculate the amount of phase correction, all the first pilot symbols (P1) and the second pilot symbols (P1') are used (the same is also performed for other P2 to P4) to calculate phase correcting component θ11, whereby correction to pilot symbol P1 with ($\pm\theta11/2$) is carried out. In contrast, pilot processor 350 of the present embodiment is configured so as to correct the phase of pilot symbol P1 by calculating phase correcting components (θ11b, θ11c) for every sub-carrier frequency component, for pilot symbol P1 in the first symbol column.

In correcting pilot symbol P1, there is a fear that estimation error becomes rather greater due to various phase conditions when phase correction is performed using phase correcting component θ11. Therefore, the present example is configured to perform phase correction based on the phase correcting components that are calculated using only the pilot symbol P1 as the reference for correlating operations.

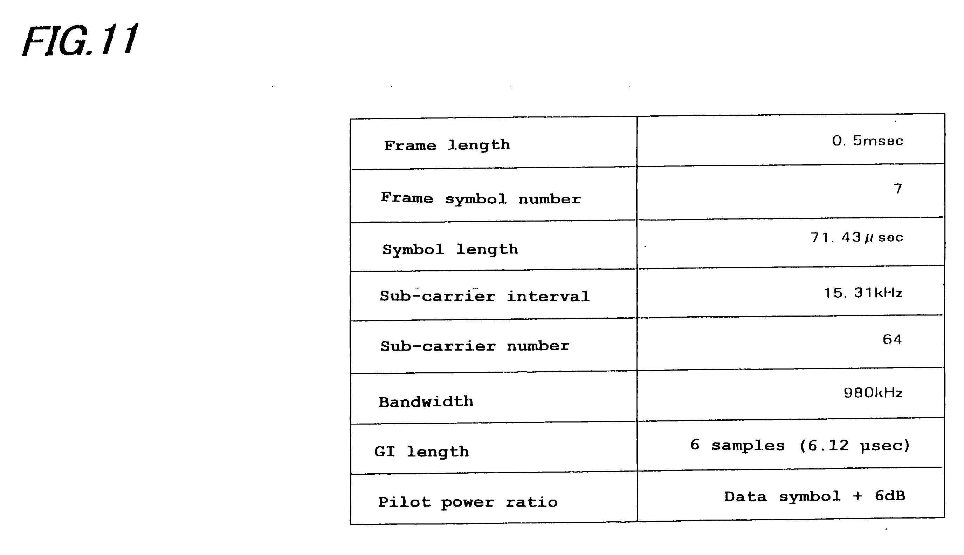

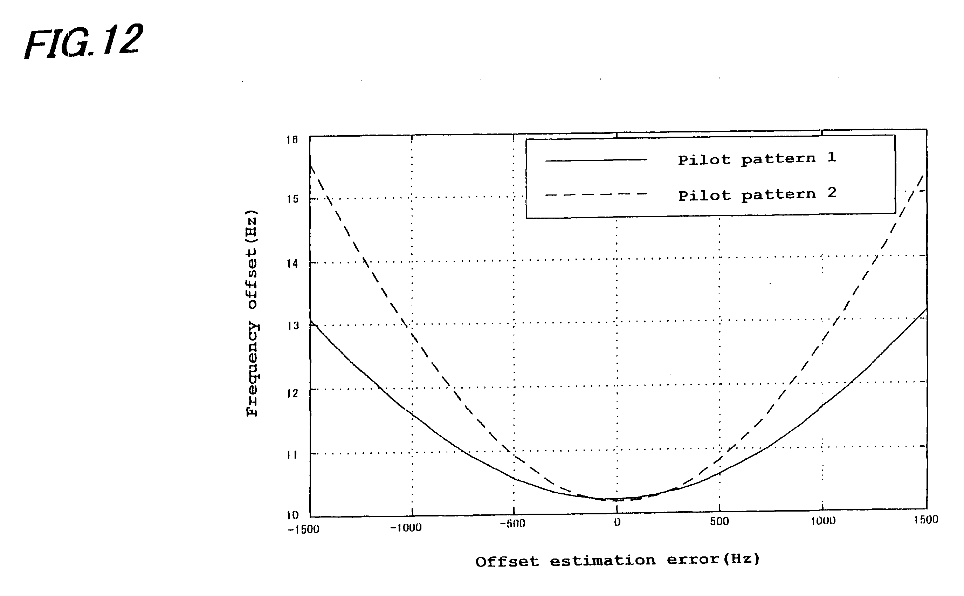

As the configurations of the frequency offset estimators and different frequency estimating methods have been described heretofore, it is found that from the result of evaluation on frequency offset estimation error by performing computer simulations of the different estimating methods, any of the methods could produce estimation within the predetermined range. FIG. 11 shows the specifications used for evaluation by computer simulation. FIGS. 12 to 14 show the simulation results by different frequency offset estimating methods.

Though the present embodiment has been described using OFDM-MIMO communication systems, the present embodiment can be applied to the case where, for example, transmission diversity is performed in a system with four transmitting antennas and one receiving antenna. Alternatively, it is also possible to apply the embodiment to an OFDM communication system with one transmitting antenna and one receiving antenna, by transmitting P1 and P2 from the transmitting antenna.

The OFDM transmitter and OFDM receiver used in the ODFM signal mobile communication system according to the present invention are not limited to the above described embodiment modes, but it goes without saying that various modifications can be added without departing from the scope of the present invention.

Since the OFDM transmitter and OFDM receiver used in the ODFM signal mobile communication system according to the present invention can improve the accuracy of frequency offset calculation to reduce interference of data between sub-carriers, prevent degradation of reception characteristics and contribute to improvement of channel estimation error using pilot symbols, and at the same time enables effective use of radio resources to improve data transmission efficiently, it is possible to widely apply them to the mobile communication systems and the like, for which highly reliable signal transmission is required.

**Claims**

1.  An OFDM transmitter for use in a communication scheme based on OFDM technology or in a communication system using OFDM technology and another communication technology, comprising:

    a pilot/data allocator for allocating pilot symbols of a predetermined known signal sequence and data symbols, at predetermined positions in OFDM symbols;
    an IFFT processor for performing IFFT operation for the OFDM symbols output from the pilot/data allocator to generate OFDM signals in time domain; and,
    a radio unit for transmitting the OFDM signals via transmission carrier signals as RF signals,
    wherein the pilot/data allocator allocates a plurality of sets including a plurality of the pilot symbols, equi-distantly in at least two ore more of the OFDM symbols, allots the pilot symbols in the set to adjoining sub-carriers and arrange the pilot symbols closely, and allocates pilot symbols in the other OFDM symbol while keeping relative positional relationship with the pilot symbols in the set.

2.  The OFDM transmitter according to Claim 1, wherein the pilot/data allocator distributes pilot symbols in such an arrangement that the pilot symbols arranged in the OFDM symbols are located line-symmetrically, taking the middle line of the frequency axis of the OFDM symbols as the axis of symmetry.

**3.** The OFDM transmitter according to Claim 1 or 2, wherein in the plural sets, the individual pilot symbols in a first set respectively have pilot symbol values that are multiplied by a first common coefficient while the individual pilot symbols in a second set respectively have pilot symbol values that are multiplied by a second common coefficient, and the pilot symbol series in the first set and the pilot series in the second set are the same except the difference between the common coefficients.

**4.** The OFDM transmitter according to any one of Claims 1 to 3, wherein the pilot/data allocator includes a data buffer unit for buffering transmission data, a pilot signal generator for generating pilot signals and a data switching control means for performing switching control between the pilot signal and the transmission data, and wherein the data switching control means changes the allocation pattern of the pilot symbols, by modifying the timing of switching control between the pilot signal and the transmission data.

**5.** The OFDM transmitter according to any one of Claims 1 to 4, wherein the another communication technology is MIMO, and the pilot/data allocator allocates multiple kinds of pilot symbols corresponding to the number of transmitting antennas in the set.

**6.** An OFDM receiver for receiving the RF signals generated by the pilot/data allocator of the OFDM transmitter defined in any one of Claims 1 to 5, comprising:

a radio unit for converting the RF signals into the baseband to generate time-domain OFDM signals;
a frequency offset estimator for estimating the offset of a modulated carrier frequency between the transmitter and the receiver; and,
a frequency offset corrector for performing frequency offset correction based on the frequency offset calculated from the frequency offset estimator, wherein
the frequency offset estimator includes:
a FFT processor for generating frequency-domain OFDM symbols from the OFDM signals;
a pilot processor which performs, of the generated OFDM symbols, complex correlating operations between a pilot symbol located at a particular sub-carrier frequency in the m-th OFDM symbol of an OFDM frame and the pilot symbols located at sub-carrier frequencies a predetermined distance apart in two directions, at higher and lower positions, from the particular sub-carrier frequency in the n-th OFDM symbol, to output a complex correlation value; and
a frequency offset calculator for calculating the frequency offset based on the phase rotation quantity of the complex correlation value.

**7.** The OFDM receiver according to Claim 6, wherein the pilot processor calculates the total average quantity of phase rotation between the particular pilot symbols that are located adjacent to each other inside one of the OFDM symbols, and performs the complex correlating operations by performing phase correction to the pilot symbols located at the particular sub-carrier frequencies in the m-th OFDM symbol based on the total average quantity of phase rotation.

**8.** The OFDM receiver according to Claim 6, wherein the pilot processor calculates the first average quantity of phase rotation between the particular pilot symbol in the m-th OFDM symbol and a pilot symbol located adjacent to the pilot symbol on the higher sub-carrier frequency side thereof, and the second average quantity of phase rotation between the particular pilot symbol in the m-th OFDM symbol and a pilot symbol located adjacent to the pilot symbol on the lower sub-carrier frequency side thereof, and performs the complex correlating operations by performing phase correction to the pilot symbol located at the particular sub-carrier frequency in the m-th OFDM symbol based on the first average quantity of phase rotation and the second average quantity of phase rotation.

*Fig. 1*

EP 2 120 377 A1

*Fig. 2*

*Fig. 3*

EP 2 120 377 A1

# FIG.4

(a) Pilot pattern 1

(b) Pilot pattern 2

## Fig. 5

EP 2 120 377 A1

# FIG.6

(a) Pilot pattern 1

(b) Pilot pattern 2

*Fig. 7*

202

EP 2 120 377 A1

Fig. 8

EP 2 120 377 A1

*Fig. 9*

Fig. 10

## FIG.11

| | |
|---|---|
| Frame length | 0. 5msec |
| Frame symbol number | 7 |
| Symbol length | 71. 43 $\mu$ sec |
| Sub-carrier interval | 15. 31kHz |
| Sub-carrier number | 64 |
| Bandwidth | 980kHz |
| GI length | 6 samples (6.12 µsec) |
| Pilot power ratio | Data symbol + 6dB |

EP 2 120 377 A1

FIG.12

FIG.13

FIG.14

## INTERNATIONAL SEARCH REPORT

| | International application No. |
|---|---|
| | PCT/JP2008/050780 |

A. CLASSIFICATION OF SUBJECT MATTER
*H04J11/00*(2006.01)i, *H04B7/04*(2006.01)i, *H04J1/00*(2006.01)i, *H04J15/00*
(2006.01)i

According to International Patent Classification (IPC) or to both national classification and IPC

B. FIELDS SEARCHED

Minimum documentation searched (classification system followed by classification symbols)
H04J11/00, H04B7/04, H04J1/00, H04J15/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | Katsutoshi ISHIKURA, Hirokazu KOBAYASHI, Toshiaki KAMENO, Hidenobu FUKUMASA, Koichi TSUNEKAWA, "OFDM Tsushin ni Okeru Shuhasu Offset Suitei Oyobi Pilot Haichi ni Kansuru Ichikento", The Institute of Electronics, Information and Communication Engineers Sogo Taikai Koen Ronbunshu, 07 March, 2007 (07.03.07), page 487, Communications 1-B-5-73 | 1,2,5,6 |
| A | JP 2000-22660 A  (Toshiba Corp.), 21 January, 2000 (21.01.00), Par. Nos. [0041] to [0044]; Fig. 4 (Family: none) | 1-8 |

☒ Further documents are listed in the continuation of Box C.      ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15 April, 2008 (15.04.08) | 22 April, 2008 (22.04.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| | International application No. |
|---|---|
| | PCT/JP2008/050780 |

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2005/015797 A1  (Matsushita Electric Industrial Co., Ltd.), 17 February, 2005 (17.02.05), Par. Nos. [0013] to [0090]; Figs. 1 to 8 & EP 1643669 A1       & WO 2005/015797 A1 & KR 10-2006-0083967 A  & CN 1833387 A | 4 |
| A | JP 11-284597 A  (Advanced Digital Television Broadcasting Laboratory), 15 October, 1999 (15.10.99), Abstract; Par. No. [0047] (Family: none) | 1-8 |
| A | JP 2005-109743 A  (Toshiba Corp.), 21 April, 2005 (21.04.05), Par. Nos. [0023] to [0030] (Family: none) | 1-8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003503944 A
- JP H09102774 B